# FASCICULE DE BREVET EUROPEEN

(11) **EP 3 414 485 B1**
(45) Date de publication et mention de la délivrance du brevet: **22.12.2021**
(21) Numéro de dépôt: 17707382.2
(22) Date de dépôt: 06.02.2017
(51) Int. Cl.: B65G 53/52, G01M 5/00, H01R 24/38, F16L 9/12, G01M 3/16, H01R 4/60

(54) **DISPOSITIF DE CONTRÔLE D'USURE DE CONDUIT, CONDUIT ET ENSEMBLE ÉLECTRIQUEMENT RACCORDABLE A UN SYSTÈME DE DÉTECTION D'USURE POUR LA RÉALISATION DUDIT DISPOSITIF DE CONTRÔLE D'USURE**
VORRICHTUNG ZUR ÜBERWACHUNG DES VERSCHLEISSES EINES ROHRES, ROHR UND ANORDNUNG, DIE ELEKTRISCH AN EIN SYSTEM ZUR ERKENNUNG VON VERSCHLEISS ANGESCHLOSSEN WERDEN KANN, UM DIESE VORRICHTUNG ZUR VERSCHLEISSÜBERWACHUNG HERZUSTELLEN
DEVICE FOR MONITORING THE WEAR OF A PIPE, PIPE AND ASSEMBLY WHICH CAN BE ELECTRICALLY CONNECTED TO A SYSTEM FOR DETECTING WEAR IN ORDER TO PRODUCE SAID DEVICE FOR MONITORING WEAR

(30) Priorité: 09.02.2016 FR 1651025
(43) Date de publication de la demande: 19.12.2018
(73) Titulaire: Trelleborg Clermont Ferrand, 63000 Clermont-Ferrand (FR)
(72) Inventeur: MARCONNET, Loïc, 63520 ESTANDEUIL (FR); MARTIN, Lucas, 63400 CHAMALIERES (FR)
(74) Mandataire: Ipsilon
(86) Numéro de dépôt international: PCT/FR2017/050264
(87) Numéro de publication internationale: WO 2017/137685

(56) Documents cités:
- WO-A1-2013/160903
- US-A1- 2004 256 127
- US-A1- 2015 376 956

## Description

### DOMAINE DE L'INVENTION

L'invention concerne un ensemble électriquement raccordable à un système de détection d'usure pour la réalisation d'un dispositif de contrôle d'usure de conduit, un conduit pour la réalisation dudit ensemble, et un dispositif de contrôle d'usure comprenant un système de détection d'usure et un ensemble du type précité, électriquement raccordable audit système.

Elle concerne plus particulièrement un ensemble électriquement raccordable à un système de détection d'usure pour la réalisation d'un dispositif de contrôle d'usure de conduit, ledit ensemble comprenant un conduit, notamment de transport de matières abrasives, dont l'usure doit être détectée à un ou plusieurs niveaux suivant le rayon du conduit, et une connectique, au moins pour le raccordement du conduit audit système de détection, ledit conduit étant équipé, par niveau de détection, d'une paire de fils électriquement conducteurs.

### ART ANTÉRIEUR

Un conduit mono ou multicouche peut s'user, notamment par abrasion, en particulier lorsque ledit conduit est utilisé pour le transport de matières abrasives, que ce soit sous une forme fluide ou sous la forme d'une matière en vrac sèche. Il n'est pas possible de vérifier à l'œil nu l'usure interne du conduit ou tuyau, c'est pourquoi il existe, depuis de nombreuses années, sur le marché, des dispositifs de détection d'usure. Un tel dispositif est par exemple décrit dans le brevet US 2004/006 53 77, ou dans le brevet US 5 634 497 ou dans la demande internationale WO 2013/160903.

Le principe de fonctionnement est toujours le même : on ferme, à l'aide des fils électriques passant dans le conduit, un circuit électrique par raccordement des fils, au moins à une alimentation électrique, et on détecte tout changement d'au moins une caractéristique conductrice de ce circuit électrique, le changement de cette caractéristique conductrice pouvant être le résultat d'une rupture du circuit électrique ou d'une modification, par exemple, de la résistance de la conductance ou autre, du circuit électrique. Lors de la détection d'un tel changement, un signal d'alarme ou autre est émis. Toute discontinuité détectée signifie que les fils électriques utilisés au niveau du conduit sont rompus ou endommagés, indiquant ainsi que le conduit est usé et doit être remplacé.

Jusqu'à présent, les fils électriques parcourant le conduit s'étendent en saillie du conduit, pour être connectés à un système de détection, tel qu'un boîtier, logeant, l'alimentation électrique, et, par exemple, un système d'alarme. Il en résulte l'impossibilité de redécouper à longueur le conduit, au risque de ne plus pouvoir le connecter.

Il est par ailleurs connu des conduits configurés pour assurer une continuité de signal électrique ou optique comme l'illustre le document US2004/0256127. Toutefois, l'application d'un tel conduit à la détection d'usure du conduit n'est pas décrite. De même, un conduit équipé d'un conducteur électrique avec un débouché axial et un débouché tangent au conduit est connu comme l'illustre le document US2015/0376956.

### BUTS ET RÉSUMÉ

Un but de la présente invention est donc de proposer un conduit et un ensemble électriquement raccordable à un système de détection intégrant un tel conduit, dont les conceptions permettent une redécoupe à longueur du conduit, sans nuire à la facilité de raccordement électrique ultérieur du conduit, et en particulier de la ou des paires de fils du conduit, à un système de détection.

Un autre but de l'invention est de proposer un conduit et un ensemble électriquement raccordable à un système de détection intégrant un tel conduit, dont les conceptions permettent un raccordement électrique adaptable à un grand nombre de conduits.

À cet effet, l'invention a pour objet un ensemble électriquement raccordable à un système de détection d'usure pour la réalisation d'un dispositif de contrôle d'usure de conduit selon la revendication 1.

La présence de chaque extrémité de fils dans une face d'extrémité du conduit permet, lors de la redécoupe du tuyau, de maintenir les extrémités de fils à nouveau au niveau des faces d'extrémité du conduit, de sorte que la connectique reste adaptée, quelle que soit la longueur choisie pour le conduit.

Il doit être noté qu'on entend par affleurement, le fait que chaque extrémité fait au plus saillie de 5 mm de la face d'extrémité.

Selon un mode de réalisation, les moyens de formation d'un pont électrique et les moyens de raccordement sont respectivement positionnables les uns, à l'une des faces d'extrémité du conduit, les autres, à l'autre des faces d'extrémité du conduit, de manière interchangeable.

En effet, les extrémités des fils étant similaires au niveau de chacune des extrémités du conduit, l'utilisateur peut indifféremment positionner les moyens de raccordement et les moyens de formation d'un pont électrique à l'une ou l'autre des extrémités du conduit. Il en résulte une simplicité de mise en œuvre, en particulier dans le cas de tuyaux de grande longueur où des contraintes externes peuvent obliger à positionner impérativement le système de détection à l'une des extrémités du conduit et non à l'autre extrémité.

Selon un mode de réalisation de l'invention, les moyens de formation d'un pont électrique et les moyens de raccordement sont respectivement positionnables les uns, à l'une des extrémités du conduit, les autres, à l'autre des extrémités du conduit, par appui en applique contre ladite face d'extrémité du conduit.

À nouveau, cette mise en œuvre facilite la pose de la connectique.

Selon un mode de réalisation, les moyens de formation d'un pont électrique comprennent un câble électrique avec deux extrémités électriquement conductrices de préférence de type pointe positionnables chacune par pression d'appui sur la face d'extrémité du conduit au niveau de laquelle les premières extrémités des fils de la paire de fils affleurent pour venir en contact d'appui l'une, avec la première extrémité de l'un des fils de la paire de fils, l'autre, avec la première extrémité de l'autre fil de la paire de fils.

Selon un autre mode de réalisation, les moyens de formation d'un pont électrique comprennent un joint d'étanchéité annulaire positionnable par l'une de ses faces en applique sur la face d'extrémité du conduit munie des premières extrémités des fils de la paire de fils, la face d'application du joint étant munie d'une surface annulaire électriquement conductrice positionnée en regard et en contact avec les premières extrémités des fils de la paire de fils à l'état positionné du joint d'étanchéité en applique contre ladite face d'extrémité du conduit.

Selon ce mode de réalisation, les moyens de formation d'un pont électrique comprennent en outre des moyens de maintien du joint d'étanchéité à l'état appliqué sur la face d'extrémité du conduit.

Selon un mode de réalisation, les moyens de raccordement électrique comprennent deux câbles électriques équipés chacun à une de leurs extrémités d'un connecteur raccordable électriquement au système de détection, l'extrémité opposée au connecteur de chaque câble étant une extrémité électriquement conductrice de préférence de type pointe positionnable par pression d'appui sur la face d'extrémité du conduit au niveau de laquelle les deuxièmes extrémités des fils de la paire de fils affleurent pour venir en contact d'appui l'une, avec la deuxième extrémité de l'un des fils de la paire de fils, l'autre, avec la deuxième extrémité de l'autre fil de la paire de fils.

Selon un autre mode de réalisation, les moyens de raccordement électrique comprennent un joint d'étanchéité annulaire positionnable en applique sur la face d'extrémité du conduit munie des deuxièmes extrémités des fils de la paire de fils, la face d'application du joint étant munie de deux portions de surfaces hémi-annulaires électriquement conductrices respectivement positionnées en regard et en contact l'une, avec l'une des deuxièmes extrémités des fils de la paire de fils, l'autre, avec l'autre des deuxièmes extrémités des fils de la paire de fils, à l'état positionné du joint en applique contre ladite face d'extrémité du conduit, chaque portion de surface hémi-annulaire étant raccordable électriquement à un conducteur électrique apte à s'étendre en saillie du pourtour circonférentiel du joint d'étanchéité annulaire, chaque conducteur électrique étant muni à son extrémité libre d'un connecteur apte à permettre le raccordement du conducteur électrique au système de détection.

Selon ce mode de réalisation, les moyens de raccordement comprennent en outre des moyens de maintien du joint d'étanchéité à l'état appliqué sur la face d'extrémité du conduit.

Selon un mode de réalisation de l'invention, les fils de la paire de fils dudit niveau de détection sont respectivement organisés sous forme d'un enroulement hélicoïdal avec un diamètre d'enroulement identique d'un enroulement hélicoïdal à l'autre enroulement hélicoïdal.

Selon un mode de réalisation de l'invention, les fils de la paire de fils dudit niveau de détection sont respectivement organisés sous forme d'un enroulement hélicoïdal avec un pas identique d'un enroulement hélicoïdal à l'autre enroulement hélicoïdal, lesdits enroulements hélicoïdaux étant décalés axialement, de préférence d'un demi pas d'un enroulement à un autre.

À nouveau, cette disposition permet de limiter les risques d'erreur lors du raccordement. En outre, cette disposition permet une fabrication simplifiée du conduit et de pouvoir recouper le conduit à la longueur désirée tout en conservant le même positionnement des fils de la paire de fil sur la face d'appui du conduit.

L'invention a encore pour objet un conduit, notamment de transport de matières abrasives à un ou plusieurs niveaux de détection d'usure pris suivant le rayon du conduit selon la revendication 11.

Selon un mode de réalisation, lesdits enroulements hélicoïdaux des fils d'une paire de fils du ou d'au moins l'un des niveaux de détection sont de pas identique d'un enroulement hélicoïdal à un autre enroulement hélicoïdal, lesdits enroulements hélicoïdaux étant décalés axialement de préférence d'un demi pas d'un enroulement à un autre.

Selon un mode de réalisation, le conduit est configuré pour former, en coopération avec une connectique et un système de détection, un ensemble conforme à celui décrit ci-dessus.

L'invention a encore pour objet un dispositif de contrôle d'usure comprenant un système de détection d'usure et un ensemble électriquement raccordable audit système de détection d'usure, ledit ensemble comprenant un conduit notamment de transport de matières abrasives dont l'usure doit être détectée à un ou plusieurs niveaux suivant le rayon du conduit, et une connectique pour le raccordement du conduit audit système de détection, ledit conduit étant équipé par niveau de détection d'une paire de fils électriquement conducteurs, caractérisé en ce que ledit ensemble du dispositif de contrôle d'usure est conforme à celui décrit ci-dessus.

### BRÈVE DESCRIPTION DES DESSINS

L'invention sera bien comprise à la lecture de la description suivante d'exemples de réalisation, en référence aux dessins annexés dans lesquels :
- La figure 1 représente une vue, avec une portion arrachée pour mieux visualiser l'intérieur, d'un conduit à deux niveaux de détection, conforme à l'invention.
- La figure 2 représente une vue en coupe transversale d'un conduit à deux niveaux de détection.
- La figure 3 représente une vue en perspective d'un conduit illustrant l'enroulement hélicoïdal des fils de la paire de fils.
- La figure 4 représente une vue en perspective partiellement éclatée d'un dispositif de contrôle d'usure conforme à l'invention.
- La figure 5A représente une vue, partiellement en perspective, d'un mode de réalisation des moyens de formation d'un pont électrique et des moyens de raccordement.
- La figure 5B représente une vue, partiellement en perspective, d'un autre mode de réalisation des moyens de formation d'un pont électrique et des moyens de raccordement.
- La figure 6 représente une vue en perspective, partiellement éclatée, d'un autre mode de réalisation d'un dispositif de contrôle d'usure conforme à l'invention.
- La figure 7 représente une vue, partiellement en perspective, du mode de réalisation des moyens de formation d'un pont électrique et des moyens de raccordement de la figure 6.

### DESCRIPTION DÉTAILLÉE

Comme mentionné ci-dessus, l'invention a pour objet de permettre la détection de l'usure d'un conduit 3 sur un ou plusieurs niveaux de détection, pris suivant le rayon du conduit, chaque niveau de détection correspondant donc à une usure du conduit, prise à une distance différente de l'axe longitudinal central du conduit. Ainsi, pour un niveau de détection, l'usure du conduit peut être détectée dans une zone écartée de l'axe longitudinal central du conduit d'une distance prédéterminée constante.

Le conduit 3, dont l'usure doit être détectée, peut être un conduit mono ou multicouches comme dans l'exemple représenté. La matière des couches peut être quelconque. Généralement au moins l'une des couches est un élastomère synthétique ou naturel, et le conduit 3 est un conduit souple.

Ce conduit 3 est un conduit cylindrique présentant deux faces d'extrémité 31, 32. Ce conduit peut servir au transport de matières abrasives sous forme liquide ou sèche, en vrac, et l'usure, notamment par abrasion, se traduit par un endommagement progressif du conduit depuis l'intérieur en direction de l'extérieur du conduit, jusqu'à provoquer une fuite, une rupture ou une explosion du conduit.

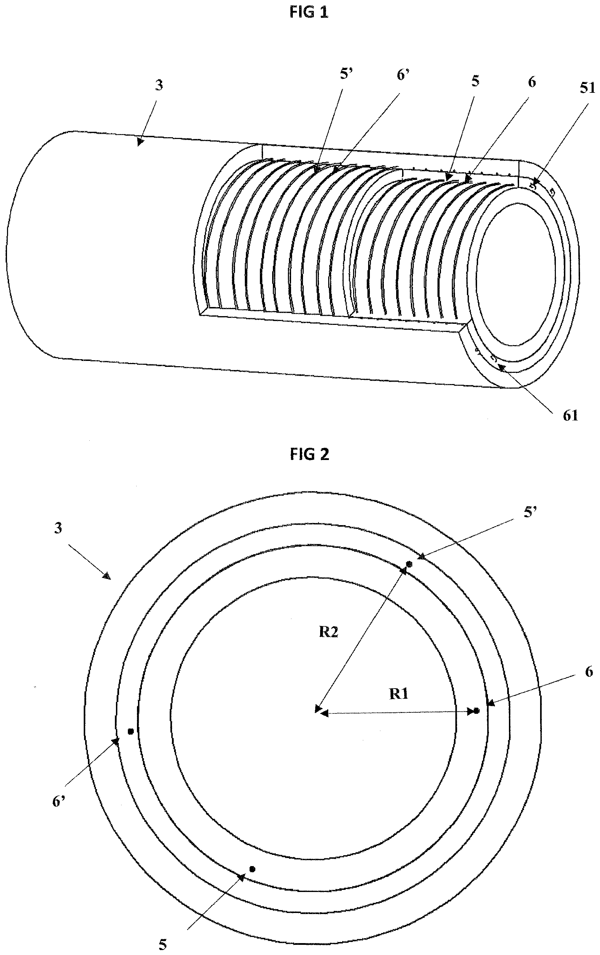

Le dispositif 1 de détection d'usure objet de l'invention permet de détecter précocement l'usure, pour éviter de telles conséquences. À cet effet, le conduit 3 est équipé, par niveau de détection, d'une paire de fils 5, 6 électriquement conducteurs. Dans l'exemple représenté aux figures 1 et 2, il est prévu deux paires de fils 5, 6, 5', 6' et donc, deux niveaux de détection d'usure, l'un, à une distance R1 de l'axe longitudinal central du conduit, l'autre, à une distance R2 de l'axe longitudinal central du conduit, comme illustré à la figure 2.

Les paires de fils sont similaires, d'un niveau de détection à un autre, et leur raccordement à leur environnement également, de sorte qu'une seule paire de fils sera décrite ci-après. En outre, généralement, de tels conduits sont équipés d'un seul niveau de détection d'usure.

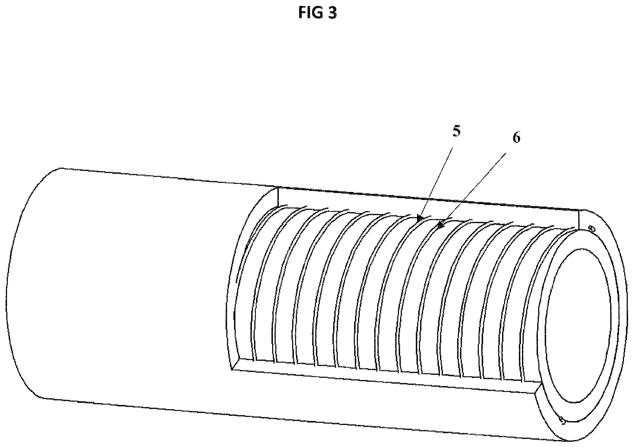

Les fils 5, 6 de la paire de fils d'un niveau de détection se présentent chacun sous forme d'un enroulement hélicoïdal qui se développe d'une extrémité à l'autre du conduit dans l'épaisseur du conduit sans interruption ni raccordement du fil entre ses deux extrémités, comme illustré à la figure 3.

Dans l'exemple représenté aux figures 1 et 3, les enroulements hélicoïdaux des fils sont identiques, c'est-à-dire de même diamètre d'enroulement et de même pas d'un enroulement à un autre, et décalés axialement d'un demi-pas d'un enroulement à un autre. Les premières extrémités 51, 61 ou respectivement les deuxièmes extrémités 52, 62 des fils s'étendent donc au niveau des faces 31, 32 d'extrémité du conduit 3, de manière diamétralement opposée.

Les fils de la paire de fils d'un niveau de détection du conduit s'étendent donc chacun d'une extrémité à l'autre du conduit dans l'épaisseur du conduit sans interruption ni raccordement du fil entre ses deux extrémités.

Chaque fil d'une paire de fils est ainsi noyé dans la matière constitutive du conduit, au sein d'une même couche du conduit. Chaque fil, qui peut être un simple fil métallique est, à l'intérieur du conduit, isolé électriquement des autres fils, l'isolation étant réalisée à l'aide de la matière constitutive du conduit, notamment lorsque cette dernière est un élastomère.

Chaque fil 5, 6 de la paire de fils présente ainsi une première extrémité 51, 61 disposée en affleurement de l'une des faces d'extrémité du conduit représentée en 31 aux figures, et l'autre extrémité 52, 62, dite seconde extrémité des fils, disposée en affleurement de l'autre des faces d'extrémité du conduit représentée en 32 aux figures, sans interruption ni raccordement du fil entre ses première et deuxième extrémités.

Ainsi, à chaque fois que le conduit est recoupé au niveau de l'une ou l'autre des extrémités du conduit, la disposition relative des extrémités des fils 5, 6 demeure la même sur la face d'extrémité du conduit 3. Les extrémités des fils sont sur un cercle de même rayon et sont écartées l'une de l'autre du même angle, facilitant ainsi la mise en place des moyens de raccordement 7 et 8.

Pour permettre la détection d'une usure, une connectique 4 est également prévue. L'ensemble 2 du conduit 3 et de la connectique 4 est raccordable à un système 9 de détection d'usure qui sera décrit ci-après. Cette connectique 4 pour ladite paire de fils 5, 6 comprend des moyens 7 de formation d'un pont électrique entre les deux premières extrémités 51, 61 des fils 5, 6 de ladite paire de fils, et des moyens 8 de raccordement électrique des secondes extrémités 52, 62 des fils 5, 6 de la paire de fils, aptes à raccorder lesdites secondes extrémités 52, 62 des fils 5, 6 au système 9 de détection.

Les premières et deuxièmes extrémités des fils sont indifféremment formées par les extrémités des fils en affleurement de l'une ou l'autre des faces d'extrémité du conduit, de sorte que les moyens 7 de formation d'un pont électrique et les moyens 8 de raccordement électrique sont respectivement positionnables, les uns à l'une des extrémités du conduit, les autres à l'autre des extrémités du conduit, de manière interchangeable. Il en résulte une simplicité de pose et une absence de risque d'erreur.

En outre, pour encore simplifier la pose, les moyens 7 de formation d'un pont électrique et les moyens 8 de raccordement sont respectivement positionnables les uns, à l'une des extrémités du conduit 3, les autres, à l'autre des extrémités du conduit 3, par appui en applique contre ladite face 31, 32 d'extrémité du conduit 3.

Le mode de réalisation des moyens 7 de formation d'un pont électrique et des moyens 8 de raccordement peut être divers et varié. Deux modes de réalisation ont été à chaque fois représentés. Toutefois d'autres modes de réalisation peuvent être envisagés, sans sortir du cadre de l'invention.

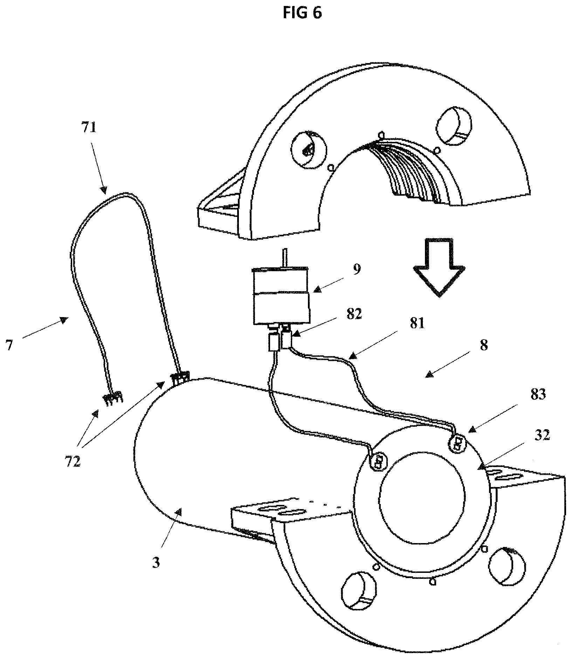

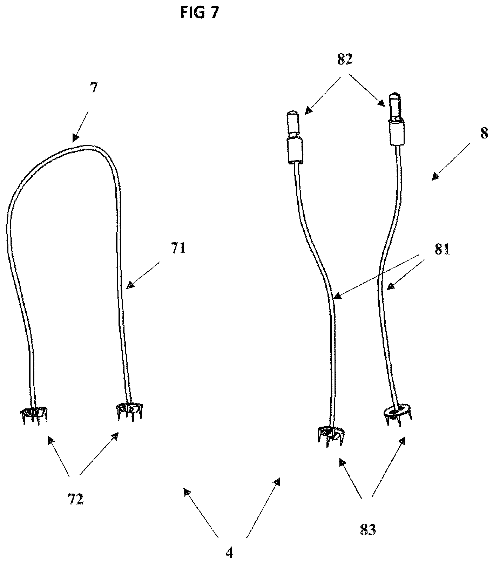

Dans l'exemple représenté aux figures 6 et 7, les moyens 7 de formation d'un pont électrique comprennent un câble 71 électrique avec deux extrémités 72 électriquement conductrices, de type pointe. Chaque extrémité 72 présente ici quatre pointes, enfichables dans la face d'extrémité du conduit au niveau de laquelle les extrémités, appelées premières extrémités 51, 61, des fils de ladite paire de fils, affleurent, pour venir en contact d'appui, l'une, avec la première extrémité 51 du fil 5, l'autre, avec la première extrémité 61 de l'autre fil 6 de la paire de fils 5, 6.

La pose est donc extrêmement simple et rapide, puisqu'il suffit à l'opérateur de repérer les extrémités des fils et d'enficher les pointes à ce niveau. Une telle mise en œuvre ne nécessite aucune compétence particulière.

Lorsqu'un joint d'étanchéité est ensuite rapporté contre la face d'extrémité du conduit et vient si nécessaire enfoncer encore plus avant lesdites pointes, le reste du câble peut être glissé sous des raccords qui viennent entourer le conduit et qui servent au maintien du joint en application contre la face d'extrémité du conduit. Ces éléments de raccord peuvent se présenter sous forme de deux demi-coquilles annulaires entourant le conduit, ces deux demi-coquilles étant aptes à être bridées à une sortie fixe de conduit de même interface ou avec une interface de conduit compatible, avec interposition du joint, si nécessaire.

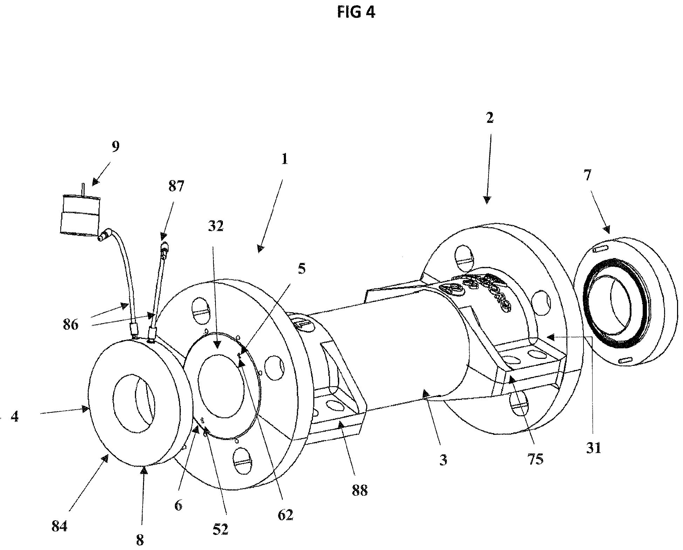

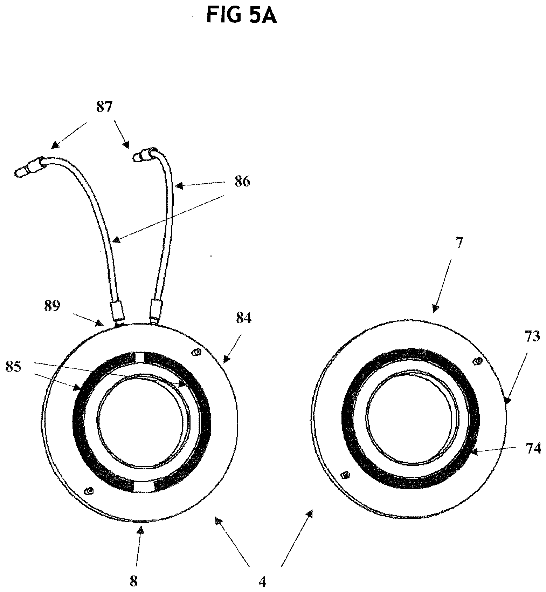

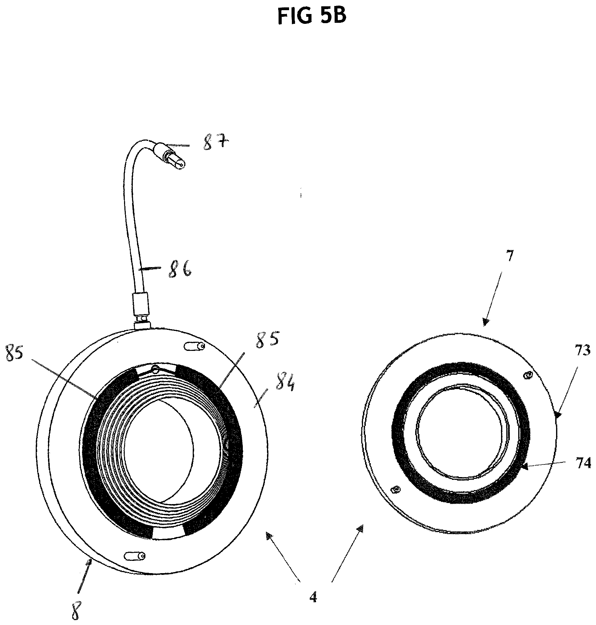

Dans un autre mode de réalisation conforme aux figures 4, 5A et 5B, les moyens 7 de formation d'un pont électrique comprennent un joint 73 d'étanchéité annulaire positionnable, par l'une de ses faces, en applique sur la face 31 d'extrémité du conduit 3 muni des premières extrémités 51, 61 des fils 5, 6 de la paire de fils.

La face d'application du joint 73 est munie d'une surface 74 annulaire, électriquement conductrice, positionnée en regard et en contact avec les premières extrémités 51, 61 des fils 5, 6 de la paire de fils à l'état positionné du joint 73 d'étanchéité, en applique contre ladite face 31 d'extrémité du conduit 3. Cette surface 74 annulaire électriquement conductrice, circulaire, réalisée par exemple en métal, permet ainsi la réalisation d'un pont de liaison électrique entre lesdites premières extrémités des fils. À nouveau, la pose de ce joint ne présente aucune difficulté, et le maintien de ce joint peut s'effectuer comme mentionné ci-dessus, à l'aide de moyens 75 de maintien formés par des éléments de raccord du conduit à un autre conduit. À nouveau, ces éléments de raccord peuvent se présenter sous forme de deux demi-coquilles annulaires entourant le conduit, ces deux demi-coquilles étant aptes à être bridées à une sortie fixe de conduite de même interface ou avec une interface de conduit compatible, avec interposition du joint, si nécessaire.

Dans l'exemple représenté à la figure 6, les moyens 8 de raccordement électrique peuvent quant à eux comprendre deux câbles 81 électriques équipés chacun, à l'une de ses extrémités, d'un connecteur 82 raccordable électriquement au système 9 de détection. L'extrémité opposée au connecteur 82 de chaque câble 81 est une extrémité 83 électriquement conductrice, ici de type pointe. À nouveau, cette extrémité 83 comporte à chaque fois une ou plusieurs pointes enfichables dans la face d'extrémité du conduit, au niveau de laquelle l'extrémité, appelée deuxième extrémité, des fils de la paire de fils, affleure, pour venir en contact d'appui, l'une, 83, avec la deuxième extrémité 52 de l'un 5 des fils 5, 6 de la paire de fils, l'autre, 83, avec la deuxième extrémité 62 de l'autre fil 6 de la paire de fils.

L'opérateur doit donc simplement repérer les extrémités de fils et pointer les pointes sur lesdites extrémités. Cette connexion s'opère donc sans difficulté et sans compétences particulières.

Les extrémités opposées des câbles sont, à l'aide de connecteurs 82, raccordables au système 9 de détection qui se présente généralement sous forme d'un boîtier. Ce boîtier est équipé de deux connecteurs, mâle ou femelle, complémentaires des connecteurs 82 des câbles, pour un raccordement électrique des fils de la paire de fils au système 9 de détection.

Dans l'exemple représenté aux figures 4, 5A et 5B, les moyens 8 de raccordement électrique comprennent un joint 84 d'étanchéité annulaire positionnable en applique sur la face 32 d'extrémité du conduit 3 munie des deuxièmes extrémités 52, 62 des fils 5, 6 de la paire de fils. La face d'application du joint 84 est munie de deux portions de surfaces 85 hémi-annulaires électriquement conductrices respectivement positionnées en regard et en contact l'une, 85, avec l'une 52 des deuxièmes extrémités 52, 62 des fils 5, 6 de la paire de fils, l'autre 85, avec l'autre 62 des deuxièmes extrémités 52, 62 des fils 5, 6 de la paire de fils, à l'état positionné du joint en applique contre ladite face 32 d'extrémité du conduit 3. Chaque portion de surface 85 hémi-annulaire est raccordable électriquement à un conducteur électrique 86 apte à s'étendre en saillie du pourtour circonférentiel du joint 84 d'étanchéité annulaire. Chaque conducteur électrique 86 est muni, à son extrémité libre, d'un connecteur 87 apte à permettre le raccordement du conducteur électrique 86 au système 9 de détection.

Les portions de surface 85 hémi-annulaires sont réalisées à l'aide de parties métalliques rapportées sur la face d'application du joint. Le maintien du joint se fait à l'aide d'éléments de raccord similaires à ceux décrits ci-dessus pour les moyens de formation d'un pont de liaison électrique.

Les conducteurs électriques 86 qui sont destinés à s'étendre entre le système de détection et le pourtour circonférentiel externe du joint d'étanchéité auquel ils sont raccordés électriquement avec une continuité électrique jusqu'aux surfaces 85 hémi-annulaires peuvent être couplés de manière amovible ou non audit joint. Dans les exemples représentés, ils sont couplés de manière amovible par l'intermédiaire de connecteurs 89, ce qui peut permettre une réutilisation aisée du système 9 de détection en cas d'usure prématurée du conduit. Dans la figure 5A, les conducteurs électriques 86 sont réalisés sous forme de deux câbles mono-fils. Dans la figure 5B, les conducteurs électriques 86 sont réalisés par les fils d'un câble multi-fils.

Le maintien du joint dans sa position d'application sur une face d'extrémité du conduit peut s'opérer quant à lui à l'aide de moyens 88 de maintien formés d'éléments de raccord, comme précédemment décrit pour les moyens 7 de formation d'un pont électrique.

Les conducteurs électriques 86 sont équipés à leur extrémité opposée à celle raccordée au joint, de connecteurs 87 du type mâle ou femelle, complémentaires des connecteurs équipant le système 9 de détection, pour un raccordement électrique aisé, à la manière d'une prise de courant. Dans le cas de conducteurs électriques 86 réalisés sous forme d'un câble multi-fils, comme illustré à la figure 5B, un seul connecteur 87 est raccordé au câble et est apte à permettre la connexion de chacun des conducteurs électriques 86 au système 9 de détection.

Le système 9 de détection se présente généralement sous forme d'un boîtier équipé intérieurement d'une source d'alimentation électrique telle qu'une batterie, destinée à alimenter le circuit électrique formé par les fils et le pont de liaison, et des moyens de détection d'un changement d'au moins une caractéristique conductrice du circuit électrique formé et ainsi alimenté. Ce changement peut être le résultat d'une rupture du circuit électrique résultant d'une usure du conduit, jusqu'à un niveau atteignant au moins l'un des fils noyés dans l'épaisseur du conduit, cette usure entraînant la rupture, ou un endommagement dudit fil. Le circuit électrique est donc ici ouvert sous l'action d'une usure.

Les moyens de détection peuvent affecter un grand nombre de formes. Des exemples de moyens de détection et d'émission de la détection opérée sont par exemple décrits dans le brevet US 2004/00 65 377.

Dans leur version la plus simple, ces moyens de détection peuvent comprendre une simple lampe disposée sur le circuit électrique formé, et qui s'éteint lorsque le circuit électrique est ouvert, l'ouverture résultant de l'usure du conduit et donc de la rupture de l'un des fils d'au moins l'une des paires de fils.

Dans une version plus élaborée, il peut être prévu un circuit de détection du type de celui décrit dans le brevet US 2004/00 65 377. Dans ce cas, les moyens de détection comprennent un régulateur de puissance, un microprocesseur, un modulateur, un amplificateur d'émetteur et une antenne disposés sur le circuit passant par la paire de fils. Ce circuit est alimenté par la batterie du système de détection, et les signaux émis sont reçus par un circuit de réception pouvant comprendre des moyens d'émission d'un signal d'alarme auditif, tel qu'une sirène, ou visuel, tel qu'une lampe, et/ou des moyens d'affichage d'informations. Des signaux peuvent également être envoyés à un automate programmable industriel, pour déclencher une alarme au niveau d'un poste de commande centralisé ou en un autre endroit situé à distance. Le signal pourrait également comporter des informations relatives à l'emplacement du défaut et/ou au type de défaut.

De manière générale, les moyens de détection surveillent le circuit électrique formé par la paire de fils et le pont électrique, pour vérifier de manière constante la continuité électrique telle que par exemple la résistance du circuit. Lorsque la valeur de la résistance mesurée est par exemple supérieure à une valeur prédéterminée, un circuit d'alarme est activé.

En variante, il peut être prévu d'alimenter le circuit électrique formé par la paire de fils et le pont électrique de liaison par une batterie, cette batterie alimentant également un microcontrôleur placé sur le circuit et apte à émettre un signal électrique de fréquence donné (par exemple une interrogation par heure), pour vérifier l'usure du conduit. Une fois le conduit usé et au moins l'un des fils de la paire de fils endommagé, le signal est interrompu ou déformé, déclenchant un signal d'alarme.

Bien évidemment, d'autres configurations du système de détection peuvent encore être envisagées, sans sortir du cadre de l'invention.

Dans le cas d'un conduit avec deux niveaux de détection, il est prévu deux paires de fils, à savoir une paire de fils par niveau de détection. Chaque paire de fils est équipée de moyens de formation d'un pont électrique et de moyens de raccordement. Dans le cas de moyens de formation d'un pont électrique et de raccordement inclus au niveau d'un joint d'étanchéité comme décrit ci-dessus, il suffit de multiplier le nombre de surfaces métalliques desdits joints en fonction du nombre de paires de fils.

Dans le cas de moyens de formation d'un pont électrique et de raccordement avec un câblage comme décrit ci-dessus, le nombre de câbles peut également être multiplié. Il en résulte une simplicité de mise en œuvre de l'ensemble.

## Revendications

1. Ensemble (2) électriquement raccordable à un système (9) de détection d'usure pour la réalisation d'un dispositif (1) de contrôle d'usure de conduit, ledit ensemble (2) comprenant un conduit (3), notamment de transport de matières abrasives, dont l'usure doit être détectée à un ou plusieurs niveaux suivant le rayon du conduit (3), et une connectique (4) au moins pour le raccordement du conduit (3) audit système (9) de détection, ledit conduit (3) étant équipé, par niveau de détection, d'une paire de fils (5, 6 ; 5', 6') électriquement conducteurs, **caractérisé en ce que**, pour le ou au moins l'un des niveaux de détection, les fils (5, 6) de la paire de fils dudit niveau de détection sont respectivement organisés sous forme d'un enroulement hélicoïdal avec un diamètre d'enroulement identique d'un enroulement hélicoïdal à l'autre enroulement hélicoïdal, les fils (5, 6) de la paire de fils dudit niveau de détection du conduit (3) s'étendent chacun d'une extrémité à l'autre du conduit (3) dans l'épaisseur du conduit (3), chaque fil (5, 6) étant à l'intérieur du conduit isolé électriquement de l'autre ou des autres fils, chaque fil (5 ; 6) de ladite paire de fils présente une extrémité, dite première extrémité (51 ; 61), disposée en affleurement, c'est-à-dire faisant au plus saillie de 5 mm, de l'une (31) des faces (31, 32) d'extrémité du conduit (3) et l'autre extrémité (52, 62) dite seconde extrémité, disposée en affleurement, c'est-à-dire faisant au plus saillie de 5 mm, de l'autre (32) des faces (31, 32) d'extrémité du conduit (3) sans interruption ni raccordement du fil (5, 6) entre ses deux extrémités (51, 52 ; 61, 62), et **en ce que** la connectique (4) pour ladite paire de fils (5, 6) comprend des moyens (7) de formation d'un pont électrique entre les deux premières extrémités (51 ; 61) des fils (5 ; 6) de ladite paire de fils et des moyens (8) de raccordement électrique des secondes extrémités (52, 62) des fils (5, 6) de ladite paire de fils aptes à raccorder lesdites secondes extrémités (52, 62) des fils (5, 6) au système (9) de détection, ledit système (9) de détection étant configuré pour détecter un changement d'au moins une caractéristique conductrice dudit circuit électrique formé par les fils (5, 6) de la paire de fils et le pont électrique de liaison.

2. Ensemble (2) selon la revendication 1,
**caractérisé en ce que** les moyens (7) de formation d'un pont électrique et les moyens (8) de raccordement sont respectivement positionnables les uns, à l'une des faces d'extrémité (31) du conduit (3), les autres, à l'autre des faces d'extrémités (32) du conduit (3), de manière interchangeable.

3. Ensemble (2) selon l'une des revendications précédentes,
**caractérisé en ce que** les moyens (7) de formation d'un pont électrique et les moyens (8) de raccordement sont respectivement positionnables les uns, à l'une des extrémités du conduit (3), les autres, à l'autre des extrémités du conduit (3), par appui en applique contre ladite face (31, 32) d'extrémité du conduit (3).

4. Ensemble (2) selon l'une des revendications précédentes,
**caractérisé en ce que** les moyens (7) de formation d'un pont électrique comprennent un câble (71) électrique avec deux extrémités (72) électriquement conductrices, de préférence de type pointe, positionnables chacune par pression d'appui sur la face (31) d'extrémité du conduit (3) au niveau de laquelle les premières extrémités (51, 61) des fils (5, 6) de la paire de fils affleurent pour venir en contact d'appui l'une (72), avec la première extrémité (51) de l'un (5) des fils (5, 6) de la paire de fils, l'autre (72), avec la première extrémité (61) de l'autre fil (6) de la paire de fils.

5. Ensemble (2) selon l'une des revendications 1 à 3,
**caractérisé en ce que** les moyens (7) de formation d'un pont électrique comprennent un joint (73) d'étanchéité annulaire positionnable par l'une de ses faces en applique sur la face (31) d'extrémité du conduit (3) munie des premières extrémités (51, 61) des fils (5, 6) de la paire de fils, la face d'application du joint (73) étant munie d'une surface (74) annulaire électriquement conductrice positionnée en regard et en contact avec les premières extrémités (51, 61) des fils (5, 6) de la paire de fils à l'état positionné du joint (73) d'étanchéité en applique contre ladite face (31) d'extrémité du conduit (3).

6. Ensemble (2) selon la revendication précédente,
**caractérisé en ce que** les moyens (7) de formation d'un pont électrique comprennent en outre des moyens (75) de maintien du joint (73) d'étanchéité à l'état appliqué sur la face (31) d'extrémité du conduit (3).

7. Ensemble (2) selon l'une des revendications précédentes,
**caractérisé en ce que** les moyens (8) de raccordement électrique comprennent deux câbles (81) électriques équipés chacun à une de leurs extrémités d'un connecteur (82) raccordable électriquement au système (9) de détection, l'extrémité opposée au connecteur (82) de chaque câble (81) étant une extrémité (83) électriquement conductrice, de préférence de type pointe, positionnable par pression d'appui sur la face (32) d'extrémité du conduit (3) au niveau de laquelle les deuxièmes extrémités (52, 62) des fils (5, 6) de la paire de fils affleurent pour venir en contact d'appui l'une (83), avec la deuxième extrémité (52) de l'un (5) des fils (5, 6) de la paire de fils, l'autre (83), avec la deuxième extrémité (62) de l'autre fil (6) de la paire de fils.

8. Ensemble (2) selon l'une des revendications 1 à 6,
**caractérisé en ce que** les moyens (8) de raccordement électrique comprennent un joint (84) d'étanchéité annulaire positionnable en applique sur la face (32) d'extrémité du conduit (3) munie des deuxièmes extrémités (52, 62) des fils (5, 6) de la paire de fils, la face d'application du joint (84) étant munie de deux portions de surfaces (85) hémi-annulaires électriquement conductrices respectivement positionnées en regard et en contact l'une (85), avec l'une (52) des deuxièmes extrémités (52, 62) des fils (5, 6) de la paire de fils, l'autre (85), avec l'autre (62) des deuxièmes extrémités (52, 62) des fils (5, 6) de la paire de fils, à l'état positionné du joint en applique contre ladite face (32) d'extrémité du conduit (3), chaque portion de surface (85) hémi-annulaire étant raccordable électriquement à un conducteur électrique (86) apte à s'étendre en saillie du pourtour circonférentiel du joint (84) d'étanchéité annulaire, chaque conducteur électrique (86) étant muni à son extrémité libre d'un connecteur (87) apte à permettre le raccordement du conducteur électrique (86) au système (9) de détection.

9. Ensemble (2) selon la revendication précédente,
**caractérisé en ce que** les moyens (8) de raccordement comprennent en outre des moyens (88) de maintien du joint (84) d'étanchéité à l'état appliqué sur la face d'extrémité (32) du conduit (3).

10. Ensemble (2) selon l'une des revendications précédentes,
**caractérisé en ce que** les fils (5, 6) de la paire de fils dudit niveau de détection sont respectivement organisés sous forme d'un enroulement hélicoïdal avec un pas identique d'un enroulement hélicoïdal à l'autre enroulement hélicoïdal, lesdits enroulements hélicoïdaux étant décalés axialement, de préférence d'un demi pas d'un enroulement à un autre.

11. Conduit (3), notamment de transport de matières abrasives à un ou plusieurs niveaux de détection d'usure pris suivant le rayon du conduit, ledit conduit (3) étant équipé par niveau de détection d'une paire de fils (5, 6 ; 5', 6') électriquement conducteurs, les fils (5, 6) de la paire de fils du ou d'au moins l'un des niveaux de détection du conduit s'étendant chacun d'une extrémité à l'autre du conduit (3) dans l'épaisseur du conduit, chaque fil (5, 6) étant à l'intérieur du conduit isolé électriquement de l'autre ou des autres fils, **caractérisé en ce que** chaque fil (5, 6) de la paire de fils du ou d'au moins l'un des niveaux de détection du conduit qui s'étendent chacun d'une extrémité à l'autre du conduit (3) dans l'épaisseur du conduit sont respectivement organisés sous forme d'un enroulement hélicoïdal avec un diamètre d'enroulement identique d'un enroulement hélicoïdal à l'autre enroulement hélicoïdal et **en ce que** chaque fil (5, 6) de la paire de fils dudit niveau de détection présente une extrémité, dite première extrémité (51, 61), disposée en affleurement, c'est-à-dire faisant au plus saillie de 5 mm, de l'une des faces (31) d'extrémité du conduit (3) et l'autre extrémité, dite seconde extrémité (52, 62), disposée en affleurement, c'est-à-dire faisant au plus saillie de 5 mm, de l'autre des faces (32) d'extrémité du conduit (3) sans interruption ni raccordement du fil (5, 6) entre ses deux extrémités (51, 52 ; 61, 62).

12. Conduit (3) selon la revendication 11,
**caractérisé en ce que** lesdits enroulements hélicoïdaux des fils d'une paire de fils du ou d'au moins l'un des niveaux de détection sont de pas identique d'un enroulement hélicoïdal à un autre enroulement hélicoïdal, lesdits enroulements hélicoïdaux étant décalés axialement de préférence d'un demi pas d'un enroulement à un autre.

13. Conduit (3) selon l'une des revendications 11 ou 12,
**caractérisé en ce qu'**il est configuré pour former en coopération avec une connectique (4) raccordable à un système (9) de détection un ensemble (2) conforme à l'une des revendications 1 à 11.

14. Dispositif (1) de contrôle d'usure comprenant un système (9) de détection d'usure et un ensemble (2) électriquement raccordable audit système (9) de détection d'usure, ledit ensemble (2) comprenant un conduit (3), notamment de transport de matières abrasives, dont l'usure doit être détectée à un ou plusieurs niveaux suivant le rayon du conduit, et une connectique (4) pour le raccordement du conduit (3) audit système de détection, ledit conduit (3) étant équipé par niveau de détection, d'une paire de fils (5, 6) électriquement conducteurs,
**caractérisé en ce que** ledit ensemble (2) du dispositif (1) de contrôle d'usure est conforme à l'une des revendications 1 à 10.

## Patentansprüche

1. Anordnung (2), die elektrisch an ein System (9) zur Erkennung von Verschleiß zur Herstellung einer Vorrichtung (1) zur Verschleißüberwachung eines Rohres anschließbar ist, wobei die Anordnung (2) ein Rohr (3) umfasst, insbesondere für den Transport von Schleifmaterialien, dessen Verschleiß in einem oder mehreren Bereichen gemäß dem Radius des Rohres (3) erkannt werden muss, und eine Verbindungstechnik (4) mindestens für den Anschluss des Rohres (3) an das Erkennungssystem (9), wobei das Rohr (3) je Erkennungsbereich mit einem Paar elektrisch leitender Drähte (5, 6; 5', 6') ausgestattet ist, **dadurch gekennzeichnet, dass** die Drähte (5, 6) des Drähtepaares des Erkennungsbereichs für den oder mindestens einen von den Erkennungsbereichen jeweils in Form einer schraubenförmigen Wicklung mit einem Wicklungsdurchmesser organisiert sind, der von einer schraubenförmigen Wicklung zu der anderen schraubenförmigen Wicklung identisch ist, wobei sich die Drähte (3) des Drähtepaares des Erkennungsbereichs des Rohres (3) jeweils von einem Ende zum anderen des Rohres (3) in der Dicke des Rohres (3) erstrecken, wobei jeder Draht (5, 6) im Inneres des Rohres von dem anderen oder den anderen Drähten elektrisch isoliert ist, wobei jeder Draht (5; 6) des Drähtepaares ein als erstes Ende (51; 61) bezeichnetes Ende aufweist, das bündig angeordnet ist, das heißt, höchstens 5 mm von der einen (31) der Endflächen (31, 32) des Rohres (3), und von dem anderen, als zweites Ende bezeichneten Ende (52, 62), das bündig angeordnet ist, das heißt, höchstens 5 mm von der anderen (32) der Endflächen (31, 32) des Rohres (3) hervorsteht, ohne Unterbrechung oder Anschluss des Drahtes (5, 6) zwischen seinen zwei Enden (51, 52; 61, 62), und dass die Verbindungstechnik (4) für das Drähtepaar (5, 6) Mittel (7) zum Bilden einer elektrischen Brücke zwischen den zwei ersten Enden (51; 61) der Drähte (5; 6) des Drähtepaares und elektrische Anschlussmittel (8) der zweiten Enden (52, 62) der Drähte (5, 6) des Drähtepaares umfasst, die imstande sind, die zweiten Enden (52, 62) der Drähte (5, 6) an das Erkennungssystem (9) anzuschließen, wobei das Erkennungssystem (9) ausgelegt ist, um eine Änderung von mindestens einem Leitungsmerkmal des Stromkreises zu erkennen, der von den Drähten (5, 6) des Drähtepaares und der elektrischen Verbindungsbrücke gebildet ist.

2. Anordnung (2) nach Anspruch 1,
**dadurch gekennzeichnet, dass** die Mittel (7) zum Bilden einer elektrischen Brücke und die Anschlussmittel (8) jeweils, die einen, an der einen der Endflächen (31) des Rohres (3), die anderen, an der anderen der Endflächen (32) des Rohres (3), gegeneinander austauschbar positionierbar sind.

3. Anordnung (2) nach einem der vorangehenden Ansprüche,
**dadurch gekennzeichnet, dass** die Mittel (7) zum Bilden einer elektrischen Brücke und die Anschlussmittel (8) jeweils, die einen, an dem einen der Enden des Rohres (3), die anderen, an dem anderen der Enden des Rohres (3) durch anliegende Abstützung an der Endfläche (31, 32) des Rohres (3) positionierbar sind.

4. Anordnung (2) nach einem der vorangehenden Ansprüche,
**dadurch gekennzeichnet, dass** die Mittel (7) zum Bilden einer elektrischen Brücke ein elektrisches Kabel (71) mit zwei elektrisch leitenden Enden (72) vorzugsweise vom Typ Spitze umfassen, die jeweils durch Abstützdruck auf der Endfläche (31) des Rohres (3) positionierbar sind, im Bereich derselben die ersten Enden (51, 61) der Drähte (5, 6) des Drähtepaares bündig sind, um, das eine (72) mit dem ersten Ende (51) von dem einen (5) der Drähte (5, 6) des Drähtepaares, das andere (72) mit dem ersten Ende (61) des anderen Drahtes (6) des Drähtepaares in Abstützungskontakt zu kommen.

5. Anordnung (2) nach einem der Ansprüche 1 bis 3,
**dadurch gekennzeichnet, dass** die Mittel (7) zum Bilden einer elektrischen Brücke eine ringförmige Dichtung (73) umfassen, die anhand der einen ihrer Flächen auf der Endfläche (31) des Rohres (3) anliegend positionierbar ist, die mit den ersten Enden (51, 61) der Drähte (5, 6) des Drähtepaares versehen ist, wobei die Anlagefläche der Dichtung (73) mit einer elektrisch leitenden ringförmigen Oberfläche (74) versehen ist, die den ersten Enden (51, 61) der Drähte (5, 6) des Drähtepaares im positionierten Zustand der Dichtung (73) an der Endfläche (31) des Rohres (3) anliegend zugewandt und im Kontakt positioniert ist.

6. Anordnung (2) nach vorangehendem Anspruch,
**dadurch gekennzeichnet, dass** die Mittel (7) zum Bilden einer elektrischen Brücke ferner Haltemittel (75) der Dichtung (73) im auf der Endfläche (31) des Rohres (3) anliegenden Zustand umfassen.

7. Anordnung (2) nach einem der vorangehenden Ansprüche,
**dadurch gekennzeichnet, dass** die elektrischen Anschlussmittel (8) zwei elektrische Kabel (81) umfassen, die jedes an einem ihrer Enden mit einem Verbinder (82) ausgestattet sind, der an das Erkennungssystem (9) elektrisch anschließbar ist, wobei das dem Verbinder (82) jedes Kabels (81) gegenüberliegende Ende ein elektrisch leitendes Ende (83), vorzugsweise von Typ Spitze ist, das durch Abstützdruck auf der Endfläche (32) des Rohres (3) positionierbar sind, im Bereich derselben die zweiten Enden (52, 62) der Drähte (5, 6) des Drähtepaares bündig sind, um, das eine (83) mit dem zweiten Ende (52) von dem einen (5) der Drähte (5, 6) des Drähtepaares, das andere (83) mit dem zweiten Ende (62) des anderen Drahtes (6) des Drähtepaares in Abstützkontakt zu kommen.

8. Anordnung (2) nach einem der Ansprüche 1 bis 6,
**dadurch gekennzeichnet, dass** die elektrischen Anschlussmittel (8) eine ringförmige Dichtung (84) umfassen, die auf der Endfläche (32) des Rohres (3), die mit den zweiten Enden (52, 62) des Drähte (5, 6) des Drähtepaares versehen ist, anliegend positionierbar ist, wobei die Anlagefläche der Dichtung (84) mit zwei halbringförmigen elektrisch leitenden Oberflächenabschnitten (85) versehen ist, die jeweils zugewandt und im Kontakt, der eine (85) mit dem einen (52) der zweiten Enden (52, 62) der Drähte (5, 6) des Drähtepaares, der andere (85) mit dem anderen (62) der zweiten Enden (52, 62) der Drähte (5, 6) des Drähtepaares im positionierten Zustand der Dichtung auf der Endfläche (32) des Rohres (3) anliegend positioniert sind, wobei jeder halbringförmiger Oberflächenabschnitt (85) an einen elektrischen Leiter (86) elektrisch anschließbar ist, der imstande ist, sich von dem Umfangskreis der ringförmigen Dichtung (84) hervorsehend zu erstrecken, wobei jeder elektrische Leiter (86) an seinem freien Ende mit einem Verbinder (87) versehen ist, der imstande ist, den Anschluss des elektrischen Leiters (86) an das Erkennungssystem (9) zu erlauben.

9. Anordnung (2) nach vorangehendem Anspruch,
**dadurch gekennzeichnet, dass** die Anschlussmittel (8) ferner Haltemittel (88) der Dichtung (84) im auf der Endfläche (32) des Rohres (3) anliegenden Zustand umfassen.

10. Anordnung (2) nach einem der vorangehenden Ansprüche,
**dadurch gekennzeichnet, dass** die Drähte (5, 6) des Drähtepaares des Erkennungsbereichs jeweils in Form einer schraubenförmigen Wicklung mit einer Steigung organisiert sind, die von einer schraubenförmigen Wicklung zu der anderen schraubenförmigen Wicklung identisch ist, wobei die schraubenförmigen Wicklungen vorzugsweise um eine halbe Steigung von einer Wicklung zur anderen axial versetzt sind.

11. Rohr (3), insbesondere zum Transport von Schleifmaterialien an einen oder mehrere Verschleißerkennungsbereiche, herangezogen gemäß dem Radius des Rohres, wobei das Rohr (3) je Erkennungsbereich mit einem elektrisch leitenden Drähtepaar (5, 6; 5', 6') ausgestattet ist, wobei sich die Drähte (5, 6) des Drähtepaares des oder von mindestens einem der Erkennungsbereiche des Rohres jeweils von einem Ende zum anderen des Rohres (3) in der Dicke des Rohres erstrecken, wobei jeder Draht (5, 6) im Inneres des Rohres von dem anderen oder den anderen Drähten elektrisch isoliert ist,
**dadurch gekennzeichnet, dass** jeder Draht (5; 6) des Drähtepaares des oder von mindestens einem der Erkennungsbereiche des Rohres, die sich jeweils von einem Ende bis zum anderen des Rohres (3) in der Dicke des Rohres erstrecken, jeweils in Form einer schraubenförmigen Wicklung mit einem Wicklungsdurchmesser organisiert sind, der von einer schraubenförmigen Wicklung zu der anderen schraubenförmigen Wicklung identisch ist, und dass jeder Draht (5, 6) des Drähtepaares des Erkennungsbereichs ein als erstes Ende (51; 61) bezeichnetes Ende aufweist, das bündig angeordnet ist, das heißt, höchstens 5 mm von der einen (31) der Endflächen (31) des Rohres (3), und von dem anderen, als zweites Ende bezeichneten Ende (52, 62), das bündig angeordnet ist, das heißt, höchstens 5 mm von der anderen der Endflächen (32) des Rohres (3) hervorsteht, ohne Unterbrechung oder Anschluss des Drahtes (5, 6) zwischen seinen zwei Enden (51, 52; 61, 62).

12. Rohr (3) nach Anspruch 11,
**dadurch gekennzeichnet, dass** die schraubenförmigen Wicklungen der Drähte eines Drähtepaares des oder von mindestens einem der Erkennungsbereiche eine Steigung haben, die von einer schraubenförmigen Wicklung zu der anderen schraubenförmigen Wicklung identisch ist, wobei die schraubenförmigen Wicklungen vorzugsweise um eine halbe Steigung von einer Wicklung zur anderen axial versetzt sind.

13. Rohr (3) nach einem der Ansprüche 11 oder 12,
**dadurch gekennzeichnet, dass** es ausgelegt ist, um im Zusammenwirken mit einer Verbindungstechnik (4), die an ein Erkennungssystem (9) anschließbar ist, eine Anordnung (2) nach einem der Ansprüche 1 bis 11 zu bilden.

14. Vorrichtung (1) zur Verschleißüberwachung, umfassend ein Verschleißerkennungssystem und eine Anordnung (2), die an das Verschleißerkennungssystem (9) elektrisch anschließbar ist, wobei die Anordnung (2) ein Rohr (3), insbesondere zum Transport von Schleifmaterialien, umfasst, dessen Verschleiß in einem oder mehreren Bereichen gemäß dem Radius des Rohres erkannt werden muss, und eine Verbindungstechnik (4) für den Anschluss des Rohres (3) an das Erkennungssystem, wobei das Rohr (3) je Erkennungsbereich mit einem Paar elektrisch leitender Drähte (5, 6) ausgestattet ist,
**dadurch gekennzeichnet, dass** die Anordnung (2) der Vorrichtung (1) zur Verschleißüberwachung nach einem der Ansprüche 1 bis 10 ist.

## Claims

1. An assembly (2) able to be electrically connected to a system (9) for detecting wear in order to produce a device (1) for monitoring the wear of a pipe, said assembly (2) comprising a pipe (3), in particular for transporting abrasive materials, the wear of which must be detected at one or several levels depending on the radius of the pipe (3), and at least one connector (4) for connecting the pipe (3) to said detection system (9), said pipe (3) being equipped with one pair of electrically conductive wires (5, 6; 5', 6') per detection level, **characterized in that**, for the or at least one of the detection levels, the wires (5, 6) of the pair of wires of said detection level are respectively organized in the form of a helical winding with an identical winding diameter from one helical winding to the other helical winding, the wires (5, 6) of the pair of wires of said detection level of the pipe (3) each extending from one end to the other of the pipe (3) in the thickness of the pipe (3), each wire (5, 6) being electrically insulated from the other wire(s) inside the pipe, each wire (5; 6) of said pair of wires having one end, called first end (51; 61), arranged flush, that is to say, protruding no more than 5 mm, from one (31) of the end faces (31, 32) of the pipe (3) and the other end (52, 62), called second end, arranged flush, that is to say, protruding no more than 5 mm, from the other (32) of the end faces (31, 32) of the pipe (3) without interruption or connection of the wire (5, 6) between its two ends (51, 52; 61, 62), and **in that** the connector (4) for said pair of wires (5, 6) comprises means (7) for forming an electric bridge between the first two ends (51; 61) of the wires (5; 6) of said pair of wires and means (8) for electrical connection of the second end (52, 62) of the wires (5, 6) of said pair of wires able to connect said second ends (52, 62) of the wires (5, 6) to the detection system (9), said detection system (9) being configured to detect a change of at least one conductive characteristic of said electrical circuit formed by the wires (5, 6) of the pair of wires and the electrical connection bridge.

2. The assembly (2) according to claim 1,
**characterized in that** the means (7) for forming an electric bridge and the connection means (8) are respectively able to be positioned for one, at one of the end faces (31) of the pipe (3), and for the other, at the other of the end faces (32) of the pipe (3), interchangeably.

3. The assembly (2) according to one of the preceding claims,
**characterized in that** the means (7) for forming an electric bridge and the connection means (8) are respectively able to be positioned for one, at one of the ends of the pipe (3), and for the other, at the other of the ends of the pipe (3), by pressing against said end face (31, 32) of the pipe (3).

4. The assembly (2) according to one of the preceding claims,
**characterized in that** the means (7) for forming an electric bridge comprise an electric cable (71) with two electrically conductive ends (72), preferably of the tip type, each able to be positioned by pressing on the end face (31) of the pipe (3) at which the first ends (51, 61) of the wires (5, 6) of the pair of wires are flush to come into bearing contact for one (72), with the first end (51) of one (5) of the wires (5, 6) of the pair of wires, for the other (72), with the first end (61) of the other wire (6) of the pair of wires.

5. The assembly (2) according to one of claims 1 to 3,
**characterized in that** the means (7) for forming an electric bridge comprise an annular sealing gasket (73) able to be positioned by one of its faces pressing on the end face (31) of the pipe (3) provided with the first ends (51, 61) of the wires (5, 6) of the pair of wires, the pressing face of the gasket (73) being provided with an electrically conductive annular surface (74) positioned opposite and in contact with the first end (51, 61) of the wires (5, 6) of the pair of wires in the state of the sealing gasket (73) positioned pressing against said end face (31) of the pipe (3).

6. The assembly (2) according to the preceding claim,
**characterized in that** the means (7) for forming electric bridge further comprise means (75) for keeping the sealing gasket (73) in the state pressed on the end face (31) of the pipe (3).

7. The assembly (2) according to one of the preceding claims,
**characterized in that** the electrical connection means (8) comprise two electrical cables (81) each equipped at one of their ends with a connector (82) able to be electrically connected to the detection system (9), the end opposite the connector (82) of each cable (81) being an electrically conductive end (83), preferably of the tip type, able to be positioned by pressing on the end face (32) of the pipe (3) at which the two ends (52, 62) of the wires (5, 6) of the pair of wires are flush to come into bearing contact for one (83), with the second end (52) of one (5) of the wires (5, 6) of the pair of wires, and for the other (83), with the second end (62) of the other wire (6) of the pair of wires.

8. The assembly (2) according to one of claims 1 to 6,
**characterized in that** the electrical connection means (8) comprise an annular sealing gasket (84) able to be positioned pressing on the end face (32) of the pipe (3) provided with the second end (52, 62) of the wires (5, 6) of the pair of wires, the application face of the gasket (84) being provided with two electrically conductive semi-annular surface portions (85) that are respectively positioned opposite and in contact, for one (85), with one (52) of the second ends (52, 62) of the wires (5, 6) of the pair of wires, and for the other (85), with the other (62) of the second ends (52, 62) of the wires (5, 6) of the pair of wires, in the state of the gasket positioned pressing against said end face (32) of the pipe (3), each semi-annular surface portion (85) being able to be electrically connected to an electrical conductor (86) that is able to extend protruding from the circumferential perimeter of the annular sealing gasket (84), each electrical conductor (86) being provided at its free end with a connector (87) able to allow the connection of the electrical conductor (86) to the detection system (9).

9. The assembly (2) according to the preceding claim,
**characterized in that** the connection means (8) further comprise means (88) for keeping the sealing gasket (84) pressed on the end face (32) of the pipe (3).

10. The assembly (2) according to one of the preceding claims,
**characterized in that** the wires (5, 6) of the pair of wires of said detection level are respectively organized in the form of a helical winding with an identical pitch from one helical winding to the other helical winding, said helical windings being axially offset, preferably by a half-pitch from one winding to another.

11. A pipe (3), in particular for transporting abrasive materials with one or several wear detection levels taken along the radius of the pipe, said pipe (3) being equipped with one pair of electrically conductive wires (5, 6; 5', 6') per detection level, the wires (5, 6) of the pair of wires of the or of at least one of the detection levels of the pipe each extending from one end to the other of the pipe (3) in the thickness of the pipe, each wire (5, 6) being electrically insulated from the other wire(s) inside the pipe,
**characterized in that** each wire (5, 6) of the pair of wires of the or of at least one of the detection levels of the pipe that each extend from one end to the other of the pipe (3) in the thickness of the pipe are respectively organized in the form of a helical winding with an identical winding diameter from one helical winding to the other helical winding and **in that** each wire (5, 6) of the pair of wires of said detection level has one end, called first end (51, 61), arranged flush, that is to say, protruding no more than 5 mm, from one of the end faces (31) of the pipe (3), and the other end, called second end (52, 62), arranged flush, that is to say, protruding no more than 5 mm, from the other of the end faces (32) of the pipe (3) without interruption or connection of the wire (5, 6) between its two ends (51, 52; 61, 62).

12. The pipe (3) according to claim 11,
**characterized in that** said helical windings of the wires of a pair of wires of the or at least one of the detection levels have an identical pitch from one helical winding to another helical winding, said helical windings being axially offset preferably by a half-pitch from one winding to another.

13. The pipe (3) according to one of claims 11 or 12,
**characterized in that** it is configured to form, in cooperation with a connector (4) able to be connected to a detection system (9), an assembly (2) according to one of claims 1 to 11.

14. A wear monitoring device (1) comprising a wear detection system (9) and an assembly (2) that can be electrically connected to said wear detection system (9), said assembly (2) comprising a pipe (3), in particular for transporting abrasive materials, the wear of which must be detected at one or several levels depending on the radius of the pipe, and a connector (4) for connecting the pipe (3) to said detection system, said pipe (3) being equipped with one pair of electrically conductive wires (5, 6) per detection level,
**characterized in that** said assembly (2) of the wear monitoring device (1) is according to one of claims 1 to 10.
